# EUROPÄISCHE PATENTSCHRIFT

(11) **EP 0 720 543 B1**
(45) Veröffentlichungstag und Bekanntmachung des Hinweises auf die Patenterteilung: **14.05.1997**
(21) Anmeldenummer: 94927494.8
(22) Anmeldetag: 29.09.1994
(51) Int. Cl.: B60R 25/00, E05B 49/00

(54) **SCHLIESSSYSTEM, INSBESONDERE FÜR KRAFTFAHRZEUGE**
LOCKING SYSTEM, IN PARTICULAR FOR MOTOR VEHICLES
SYSTEME DE VERROUILLAGE, NOTAMMENT POUR VEHICULES à MOTEUR

(30) Priorität: 01.10.1993 DE 4333505; 26.11.1993 DE 9320270 U
(43) Veröffentlichungstag der Anmeldung: 10.07.1996
(73) Patentinhaber: Marquardt GmbH, 78604 Rietheim-Weilheim (DE)
(72) Erfinder: MARQUARDT, Jakob, D-78604 Rietheim-Weilheim (DE); MÜLLER, Karl, D-78628 Rottweil-Neufra (DE)
(74) Vertreter: Patentanwälte Eisele, Otten & Roth
(86) Internationale Anmeldenummer: DE9401131
(87) Internationale Veröffentlichungsnummer: WO9509746

(56) Entgegenhaltungen:
- EP-A- 0 266 803
- EP-A- 0 307 749
- EP-A- 0 378 945
- WO-A-89/02141
- DE-A- 2 920 885
- DE-U- 9 307 176
- FR-A- 2 544 782
- FR-A- 2 674 895
- GB-A- 2 051 442
- GB-A- 2 265 482

## Beschreibung

Die Erfindung betrifft ein Schließsystem nach dem Oberbegriff des Patentanspruchs 1.

Derartige Schließsysteme dienen als Sicherheitseinrichtung gegen den unbefugten Betrieb damit ausgerüsteter Vorrichtungen. Bei Betätigung des Schließsystems durch einen Benutzer wird dessen Berechtigung überprüft und lediglich das Vorliegen der richtigen Berechtigung schafft die Voraussetzung für die bestimmungsgemäße Benutzung der Vorrichtung. Vor allem an Kraftfahrzeugen werden solche Schließsysteme als Zündschloß für ein zugehöriges Betriebsaggregat und/oder zum Ver- und Entriegeln der Türen eingesetzt.

Aus der DE-OS 34 36 761 ist ein Schließsystem für ein Kraftfahrzeug bekannt, das aus einem Betriebsschlüssel, einer Betriebsschlüsselaufnahme und Verbindungsleitungen zu einem zugehörigen Betriebsaggregat besteht. Im Betriebsschlüssel sind ein Betriebssignalsender mit Betriebssignalcodierer und in der Betriebsschlüsselaufnahme ein Betriebssignalempfänger mit Betriebssignaldecodierer angeordnet. Ein codiertes Betriebssignal ist vom Betriebssignalsender auf den Betriebssignalempfänger übertragbar, wobei nach erfolgreicher Decodierung dieses Betriebssignals im Betriebssignaldecodierer die Inbetriebnahme des Betriebsaggregats vorgenommen wird.

Es hat sich herausgestellt, daß ein derartiges Schließsystem nicht diebstahlsicher ist. Durch Abhören und/oder Kopieren des vom Betriebsschlüssel übertragenen Betriebssignals ist es möglich, einen Ersatzschlüssel anzufertigen. Mit diesem Ersatzschlüssel ist dann eine Inbetriebnahme des Betriebsaggregats und folglich ein Diebstahl des Kraftfahrzeugs möglich.

Der Betriebsschlüssel benötigt zu seiner Funktion eine Energiequelle, die nach einer gewissen Gebrauchsdauer erschöpft sein kann. In einem derartigen Fall ist der Betriebsschlüssel nicht mehr funktionstüchtig. Eine Inbetriebnahme des Betriebsaggregats kann dann nicht erfolgen.

In der FR-A-2 674 895 ist ein Schließsystem für die Autotüren eines Kraftfahrzeugs beschrieben, das mittels Funkwellen zur Datenübertragung arbeitet. In der Autotür befindet sich ein erster Sender/Empfänger mit einer Antenne. Im Griff eines zugehörigen Schlüssels befindet sich eine Antenne mit einem zweiten Sender/Empfänger. Vom ersten Sender wird ein erster Code auf den zweiten Empfänger im Schlüssel übertragen. Aus diesem Signal wird Energie zur Versorgung des Schlüssels gewonnen und der erste Code ausgewertet. Anschließend wird ein zweiter Code vom zweiten Sender auf den ersten Empfänger in der Autotür übertragen und dort ausgewertet. Bei positiver Auswertung wird die Zentralverriegelung in der Autotür betätigt.

Bei diesem Schließsystem erfolgt wiederum eine bidirektionale Codeübertragung mit gleichzeitiger Übertragung von Energie auf den Schlüssel zu dessen Betrieb. Die bereits genannte Problematik tritt auch hier auf. Weitere Schließ- oder Sicherheitssysteme, die mittels einer bidirektionalen Datenübertragung zum Austausch der Codes arbeiten, sind in der GB-A-2 051 442 und der DE-U-93 07 176 beschrieben. Eine Übertragung von Energie zum Betrieb des Schlüssels ist dort jedoch nicht gezeigt.

Aus der EP-A-0 307 749 wiederum ist eine als Schließsystem einsetzbare Datenübertragungseinrichtung mit zwei optischen Sende-/Empfangseinheiten gemäß dem Oberbegriff des Anspruchs 1 bekannt, bei der Daten optisch bidirektional übertragen werden. Nach erfolgreichem Dialog der Datenübertragung wird das Schließsystem betätigt. In der ersten Sende-/Empfangseinheit ist zusätzlich ein Lichtsender zur Übertragung von Lichtenergie und in der zweiten Sende-/Empfangseinheit ist ein Lichtempfänger zur Umwandlung der Lichtenergie in elektrische Energie angeordnet. Weiter befindet sich in der zweiten Sende-/Empfangseinheit ein Speicher für die elektrische Energie, beispielsweise ein Kondensator, so daß die zweite Sende-/Empfangseinheit von dieser übertragenen Energie versorgt wird. Die Lichtenergie wird in den Sendepausen der Datenübertragung übertragen.

Die Schwierigkeiten bei einem System gemäß dem Stand der Technik liegen hierbei darin, daß bei gleichzeitiger Übertragung eine Energieabstrahlung mit ausreichendem Betrag die Datenübertragung stören kann. Daher wird die Datenübertragung zeitlich getrennt von der Energieübertragung durchgeführt, was die Zeitdauer der Übertragungen insgesamt verlängert. Hierdurch wird die Gefahr von Fehlbedienungen und damit von Beeinträchtigungen der Diebstahlsicherheit erhöht.

Der Erfindung liegt die Aufgabe zugrunde, ein Schließsystem der genannten Art, insbesondere für ein Kraftfahrzeug, mit einer verbesserten Diebstahl- und Funktionssicherheit anzugeben.

Dieses Problem wird gemäß der Erfindung durch die Merkmale des Anspruchs 1 gelöst. Demnach zeichnet sich ein erfindungsgemäßes Schließsystem dadurch aus, daß die Signalübertragung über einen in der Betriebsschlüsselaufnahme angeordneten Lichtleiter und/oder die Energieübertragung über einen in der Betriebsschlüsselaufnahme angeordneten Lichtleiter erfolgt, und daß die entsprechenden im Betriebsschlüssel und in der Betriebsschlüsselaufnahme befindlichen elektrooptischen Wandlerelemente mit dem Lichtleiter oder den Lichtleitern in optischer Verbindung stehen.

Weitere Ausgestaltungen der Erfindung sind Gegenstand der Unteransprüche. Insbesondere läßt sich das Schließsystem nicht allein als Zündschloß für die Inbetriebnahme einer Motorelektronik, einer Wegfahrsperre oder dergleichen sondern auch für die sichere Fernbedienung der Zentralverriegelung am Kraftfahrzeug ausgestalten. Weiter läßt sich das Schließsystem über einen Busknoten an ein im Kraftfahrzeug befindliches Bussystem anschließen. Das Schließsystem basiert auf einer gegebenenfalls drahtlosen Übertragung von codierten Betriebssignalen.

Zudem erfolgt eine Energieübertragung von der Betriebsschlüsselaufnahme auf den Betriebsschlüssel, wobei hierfür eine optische Energieübertragung durchgeführt wird. Diese übertragene Energie dient zum bestimmungsgemäßen Betrieb des Betriebsschlüssels. Dadurch ist ein zusätzlicher Energiespeicher im Betriebsschlüssel für dessen Betrieb nicht mehr notwendig. Bei der optischen Energie- und Signalübertragung kann in der Betriebsschlüsselaufnahme ein Lichtleiterstab angeordnet sein, der zur gleichzeitigen Übertragung von Energie und Signalen ausgestaltet ist. Bei einer als Zündschloß ausgebildeten Betriebsschlüsselaufnahme des Schließsystems kann die Betriebsschlüsselaufnahme derart ausgestaltet werden, daß die eigentliche Inbetriebnahme des Betriebsaggregats in gewohnter Weise mittels einer Drehung durch den Betriebsschlüssel erfolgt.

Die mit der Erfindung erzielten Vorteile bestehen insbesondere darin, daß eine weitere Verbesserung der Diebstahlsicherheit erreicht wird. Ein Abhören des Betriebsschlüssels über einen Minisender ist nicht möglich. Somit ist der Betriebsschlüssel in der Praxis nicht kopierbar, womit eine Inbetriebnahme des Betriebsaggregats für Unberechtigte nicht möglich ist.

Der Betriebsschlüssel ist weitgehend wartungsfrei. Die Energieversorgung des Betriebsschlüssels erfolgt durch die Betriebsschlüsselaufnahme. Selbst bei an sich erschöpftem Energiespeicher im Betriebsschlüssel ist ein bestimmungsgemäßer Gebrauch des Betriebsschlüssels noch möglich. So kann ein Zweitschlüssel sogar völlig ohne Energiespeicher bei gleicher Sicherheit für die Inbetriebnahme des Betriebsaggregats ausgestaltet sein. Das Schließsystem läßt sich auch lediglich im Teilausbau ohne die fernbedienbare Türöffnung bei gleicher Startsicherheit realisieren, wobei dann kein eigener Energiespeicher im Betriebsschlüssel notwendig ist.

Die Betriebsschlüsselaufnahme läßt sich mechanisch sehr einfach ausgestalten, so daß das erfindungsgemäße Schließsystem bei gesteigerter Diebstahlsicherheit mit deutlichen geringeren Kosten gegenüber herkömmlichen mechanischen Schließsystemen herstellbar ist. Weiter läßt sich die Betriebsschlüsselaufnahme auf einfache Weise in ein Bus-System integrieren. Vorteilhafterweise resultiert dann ein geringer Verkabelungsaufwand bei hoher Betriebssicherheit.

Ausführungsbeispiele der Erfindung sind in den Zeichnungen dargestellt und werden im folgenden näher beschrieben. Es zeigen
- Fig. 1: schematisch eine Funktionsübersicht des Schließsystems in einem Kraftfahrzeug,
- Fig. 2: ein Blockschaltbild für die Elektronik des Schließsystems ,
- Fig. 3: einen Längsschnitt durch einen Betriebsschlüssel und
- Fig. 4: einen Längsschnitt durch eine Betriebsschlüsselaufnahme.

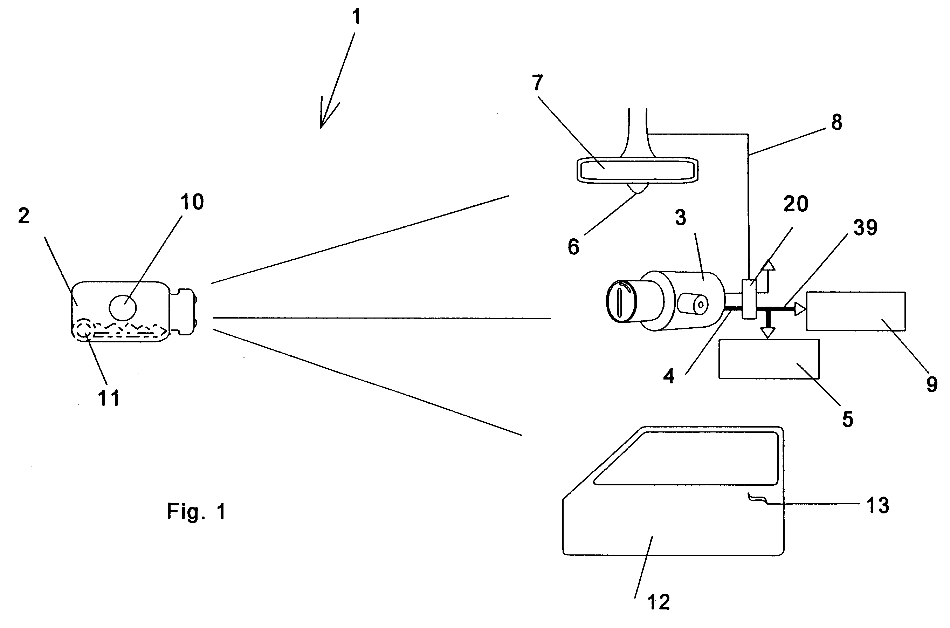

Das in Fig. 1 gezeigte Schließsystem 1 ist für ein Kraftfahrzeug bestimmt und besteht aus einem Betriebsschlüssel 2, einer als Zündschloß ausgebildeten Betriebsschlüsselaufnahme 3 und Verbindungsleitungen 4 zu einem Busknoten 20. Vom Busknoten 20 führen Busleitungen 39 weiter zu einem zugehörigen Betriebsaggregat 5. Beim Betriebsaggregat 5 kann es sich beispielsweise um die elektronische Motorsteuerung des Kraftfahrzeugs, eine Wegfahrsperre o. dgl. handeln. Mittels des in die Betriebsschlüsselaufnahme 3 eingeführten Betriebsschlüssels 2 kann das Betriebsaggregat 5 durch entsprechende, über die Busleitungen 39 übermittelte Bussignale in Betrieb genommen werden.

Bei dem aus Busknoten 20 und Busleitungen 39 bestehenden Bussystem kann es sich beispielsweise um den aus der Automobil-Elektronik bekannten CAN-Bus handeln, wie er beispielsweise in der Literaturstelle Philips: CAN-Produkte für universelle Anwendungsfelder, Januar 1992 beschrieben ist. Selbstverständlich ist auch ein anderes Bussystem gleichermaßen verwendbar.

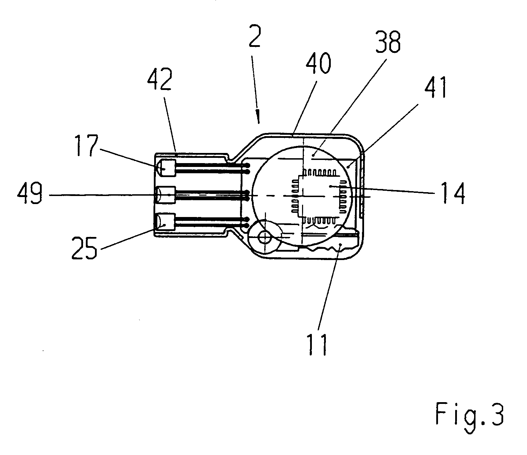

Vorliegend dient der Betriebsschlüssel 2 des Schließsystems 1 gleichzeitig zur fernbedienbaren Betätigung der Zentralverriegelung für die Türen 12 des Kraftfahrzeugs. Die Fernbedienung wird von einem im Betriebsschlüssel 2 befindlichen Energiespeicher 38 (siehe Fig. 3) versorgt. Im Kraftfahrzeug ist ein zur Fernbedienung im Betriebsschlüssel 2 korrespondierender Sensor angeordnet, der beispielsweise als Dachsensor 6 mit einem Empfangsbereich von ca. 360 Grad ausgebildet ist. Dieser Dachsensor 6 ist am Innenspiegel 7 angebracht. Der zur Stromminimierung im gepulsten Betrieb arbeitende Dachsensor 6 steht über Verbindungsleitungen 8 mit dem Busknoten 20 in Verbindung. Empfängt der Dachsensor 6 Signale vom Betriebsschlüssel 2, so bewirken diese mittels einer im Busknoten 20 befindlichen Aufweckschaltung deren Bearbeitung. Entsprechende Bussignale werden dann über die Busleitungen 39 zum Steuergerät 9 für die Zentralverriegelung weitergeleitet. Somit ist mittels Tastendruck einer Taste 10 am Betriebsschlüssel 2 die Zentralverriegelung zur Ver- und Entriegelung der Türen 12 des Kraftfahrzeugs betätigbar.

Das Schließsystem 1 kann vorteilhafterweise gleichzeitig zur Ver- und Entriegelung der Alarmanlage dienen. Entsprechend der Bedienung in der Betriebsschlüsselaufnahme 3 werden dann die Funktionen der Alarmanlage gesteuert. Weiter kann in der Betriebsschlüsselaufnahme 3 eine Logik zur Ermittlung der Spannung des Energiespeichers 38 im Betriebsschlüssel 2 angeordnet sein, damit ein Einbruch über Öffnung einer Tür 12 des Kraftfahrzeugs erkannt wird.

Der Betriebsschlüssel 2 besitzt weiter einen ausklappbaren mechanischen Schlüssel 11. An der fahrerseitigen Autotür 12 ist ein herkömmliches mechanisches Türschloß 13 angeordnet, das mittels des mechanischen Schlüssels 11 entriegelbar ist. Dadurch ist eine Notöffnung des Kraftfahrzeugs im Falle eines Ausfalls der Zentralverriegelung, beispielsweise bei leerem Energiespeicher 38 im Betriebsschlüssel 2, möglich.

Das Schließsystem 1 läßt sich gemäß einer weiteren Ausführungsform auch lediglich in einem Teilausbau unter Verzicht auf die fernbedienbare Betätigung der Zentralverriegelung realisieren. Bei dieser Ausführungsform erfolgt das Ver- und Entriegeln der Autotüren 12 auf herkömmliche Weise mittels eines mechanischen Schlüssels 11. Das Betriebsaggregat 5 wird durch den in der Betriebsschlüsselaufnahme 3 eingeführten Betriebsschlüssel 2 auf die erfindungsgemäße Weise gemäß einer bidirektionalen Kommunikation, die noch näher erläutert wird, in Betrieb genommen. Bei diesem Teilausbau lassen sich zumindestens die Kosten für den Dachsensor 6 unter Inkaufnahme eines geringeren Bedienungskomforts einsparen.

Die in Fig. 1 gezeigte Ausbildung der Betriebsschlüsselaufnahme 3 als Zündschloß ist zwar bevorzugt, es läßt sich jedoch die Betriebsschlüsselaufnahme auch als eine sonstige mittels des Betriebsschlüssels 2 bedienbare Einrichtung am Kraftfahrzeug ausgestalten. So kann die Betriebsschlüsselaufnahme auch als am Kraftfahrzeug befindliche Signalverarbeitungseinrichtung für die Zentralverriegelung, die mittels des Betriebsschlüssels 2 fernbedienbar sein kann, und das Betriebsaggregat als Zentralverriegelung für die Ent- und Verriegelung der Autotüren 12 ausgebildet sein. In diesem Fall wird die Zentralverriegelung nach erfolgreicher bidirektionaler Übertragung der Betriebssignale in der Art eines Wechselcodes zwischen dem Betriebsschlüssel 2 und der Signalverarbeitungseinrichtung von der Signalverarbeitungseinrichtung zur Ver- oder Entriegelung der Autotüren 12 betätigt. Die bidirektionale Übertragung der Betriebssignale wird im folgenden noch näher erläutert.

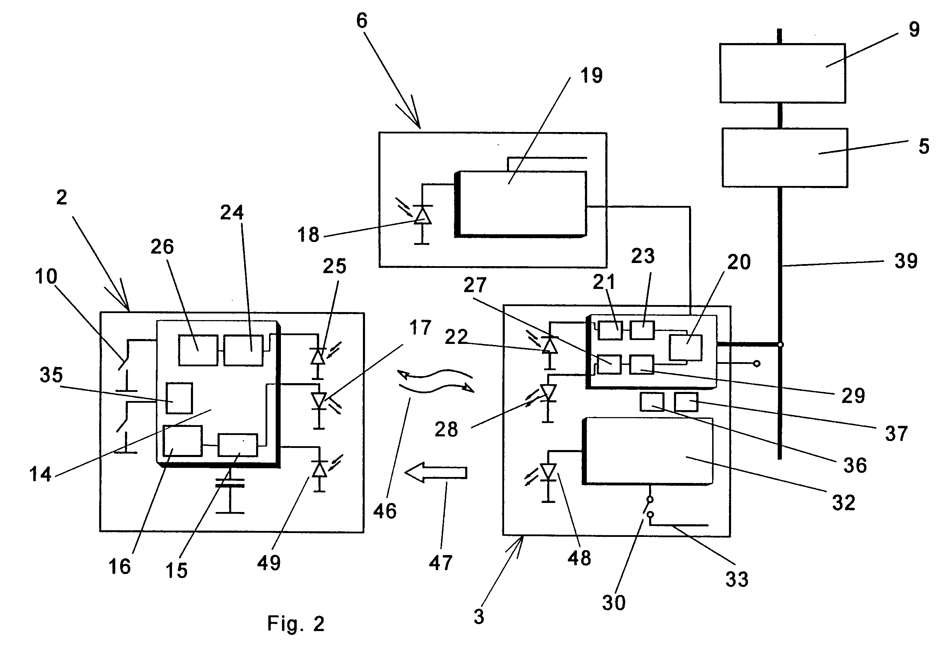

Die nähere Ausgestaltung der Elektronik des Schließsystems 1 ist als Blockschaltbild in Fig. 2 gezeigt. Der Betriebsschlüssel 2 besitzt eine aus einer integrierten Schaltung bestehende Schlüsselelektronik 14. Diese Schlüsselelektronik 14 enthält einen ersten Betriebssignalsender 15, der als Infrarotsender mit einer Infrarot-Sendediode 17 ausgebildet sein kann. Weiter enthält die Schlüsselelektronik 14 einen ersten Betriebssignalcodierer 16, der wiederum mit dem ersten Betriebssignalsender 15 in Verbindung steht. Die Betriebsschlüsselaufnahme 3 besitzt einen ersten, als Infrarot-Empfänger ausgebildeten Betriebssignalempfänger 21 mit zugehöriger Infrarot-Empfangsdiode 22 und einen mit dem ersten Betriebssignalempfänger 21 in Verbindung stehenden ersten Betriebssignaldecodierer 23. Dadurch ist ein erstes codiertes Betriebssignal vom ersten Betriebssignalsender 15 des Betriebsschlüssels 2 auf den ersten Betriebssignalempfänger 21 in der Betriebsschlüsselaufnahme 3 übertragbar. Weiter sind nun jeweils ein zweiter, als Infrarot-Empfänger ausgebildeter Betriebssignalempfänger 24 mit zugehöriger Infrarot-Empfangsdiode 25 sowie damit verbundenem zweiten Betriebssignaldecodierer 26 im Betriebsschlüssel 2 und ein zweiter, als Infrarot-Sender ausgebildeter Betriebssignalsender 27 mit zugehöriger Infrarot-Sendediode 28 sowie damit verbundenem zweiten Betriebssignalcodierer 29 in der Betriebsschlüsselaufnahme 3 angeordnet. Dadurch ist wiederum ein zweites codiertes Betriebssignal vom zweiten Betriebssignalsender 27 in der Betriebsschlüsselaufnahme 3 auf den zweiten Betriebssignalempfänger 24 im Betriebsschlüssel 2 übertragbar. Die Übertragungsstrecke für die als Betriebssignale dienenden Infrarot-Signale kann aus Luft bestehen, bevorzugterweise wird dafür jedoch ein in der Betriebsschlüsselaufnahme 3 angeordneter Lichtleiter verwendet. Zur Inbetriebnahme des Betriebsaggregats 5 wirkt das zweite Betriebssignal mit dem ersten Betriebssignal in einer bidirektionalen Kommunikation 46 in der Art eines Wechselcodes zusammen.

Die Funktion der bereits erwähnten Fernbedienung der Zentralverriegelung wird ebenfalls vom ersten Betriebssignalsender 15 ausgeübt, indem dieser bei Betätigung der Taste 10 einen vom ersten Betriebssignalcodierer 16 verschlüsselten Code als drittes Betriebssignal über die Infrarot-Sendediode 17 aussendet. Im Dachsensor 6 befinden sich eine oder mehrere Infrarot-Empfangsdioden 18 mit angeschlossenem dritten Betriebssignalempfänger 19. Das dritte Betriebssignal wird über die Verbindungsleitungen 8 zum Busknoten 20 zur Auswertung und Weiterverarbeitung zugeleitet.

In Fig. 2 ist als weitere Ausführungsform zu sehen, daß der Busknoten 20 vorteilhafterweise in der Betriebsschlüsselaufnahme 3 angeordnet sein kann. Der Dachsensor 6 steht dann über die Betriebsschlüsselaufnahme 3 mit dem Busknoten 20 in Verbindung. Beim ersten Betriebssignaldecodierer 23 kann es sich um eine separate Schaltung in der Betriebsschlüsselaufnahme 3 handeln, wobei der vom ersten Betriebssignaldecodierer 23 entschlüsselte Code als binäres Signal zum Busknoten 20 weitergeleitet wird. Es ist jedoch auch möglich, die Funktion des Betriebssignaldecodierers in den Busknoten 20 zu integrieren, so daß das vom ersten Betriebssignalempfänger 21 empfangene Betriebssignal als codiertes Signal direkt zum Busknoten 20 weitergeleitet wird. Alternativ ist es weiter möglich, die empfangenen Infrarot-Signale mittels eines Lichtleiters zum Busknoten 20 weiterzuleiten und erst dort in elektrische Signale zur weiteren Verarbeitung umzuwandeln.

Sobald der Betriebsschlüssels 2 in die Betriebsschlüsselaufnahme 3 eingeführt ist, wird durch den Betriebsschlüssel 2 ein Schalter 30 in der Betriebsschlüsselaufnahme 3 betätigt. Durch den Schalter 30 wird dann eine optische Energieübertragung 47 zwischen der Betriebsschlüsselaufnahme 3 und dem Betriebsschlüssel 2 eingeschaltet. Damit wird dann die Schlüsselelektronik 14 durch die Betriebsschlüsselaufnahme 3 mit Energie versorgt, so daß ein im Betriebsschlüssel 2 vorhandener Energiespeicher 38 lediglich bei Betätigung der Fernbedienung zur Zentralverriegelung, die außerhalb der Betriebsschlüsselaufnahme 3 erfolgt, benötigt wird. Dadurch besitzt der Energiespeicher 38 eine sehr lange Lebensdauer, so daß ein Auswechseln des Energiespeichers 38 sehr selten erforderlich ist. Wird anstelle einer Batterie für den Energiespeicher 38 ein Akkumulator verwendet, kann dieser sogar, während sich der Betriebsschlüssel 2 in der Betriebsschlüsselaufnahme 3 befindet, nachgeladen werden, womit sich ein Auswechseln des Energiespeichers 38 erübrigt.

Zur Erhöhung der Betriebssicherheit erfolgt, wie in Fig. 2 gezeigt, die optische Energieübertragung 47 mittels Licht- oder Infrarot-Strahlen. Ist durch den in die Betriebsschlüsselaufnahme 3 eingeführten Betriebsschlüssel 2 der Schalter 30 betätigt, so speist die Energieübertragungs-Elektronik 32, die wiederum durch die Bordnetz-Zuleitung 33 versorgt ist, ein Leuchtelement 48, das beispielsweise Infrarot-Strahlen emittiert. Diese Infrarot-Strahlen werden auf ein korrespondierendes Photoelement 49 im Betriebsschlüssel 2 übertragen und zwar, wie besonders bevorzugt ist, über einen Lichtleiter. In diesem Photoelement 49 werden dann die Infrarot-Strahlen wieder in eine elektrische Spannung umgewandelt. Die mittels der elektrooptischen Wandlerelemente, nämlich dem Leuchtelement 48 und Photoelement 49 optisch übertragene Energie dient wiederum zum Betrieb der Schlüsselelektronik 14.

Wie weiter der Fig. 2 zu entnehmen ist, enthält die Schlüsselelektronik 14 einen Datenspeicher 35, bei dem es sich beispielsweise um einen EEPROM-Speicher handeln kann. In diesem Datenspeicher 35 ist eine eindeutige Kennung für das jeweilige Kraftfahrzeug als Individualkennung abgelegt. Bei dieser Individualkennung kann es sich beispielsweise um eine vom Kraftfahrzeughersteller vergebene, eindeutige Nummer handeln. Dieselbe Individualkennung ist ebenfalls in einem Datenspeicher 37 in der Betriebsschlüsselaufnahme 3 abgespeichert. Die Betriebssignalcodierer 16, 29 und Betriebssignaldecodierer 23, 26 arbeiten nach einem festgelegten Algorithmus. Der Algorithmus kann gegebenenfalls im Datenspeicher 35, 37 abgelegt oder auch durch eine entsprechende elektronische Schaltung realisiert sein. Weiter befindet sich in der Betriebsschlüsselaufnahme 3 noch ein Zufallszahlengenerator 36.

Für die Inbetriebnahme des Betriebsaggregats 5 wird, nachdem der Betriebsschlüssel 2 in die Betriebsschlüsselaufnahme 3 eingeführt und die Energieübertragung 47 eingeschaltet ist, eine einmalige Identifizierung der Individualkennung anhand der bidirektionalen Kommunikation 46 zwischen den beiden Betriebssignalen in der Art eines Wechselcodes durchgeführt. Diese bidirektionale Kommunikation 46 verläuft im Einzeln auf folgende Weise.

Zunächst wird mittels des Zufallszahlengerators 36 eine Zufallszahl als Kennzahl ermittelt und im Datenspeicher 37 der Betriebsschlüsselaufnahme 3 abgespeichert. Aus dieser Kennzahl wird im zweiten Betriebssignalcodierer 29 der Betriebsschlüsselaufnahme 3 anhand des festgelegten Algorithmus ein Code gebildet, der als zweites Betriebssignal mittels des zweiten Betriebssignalsenders 27 auf den Betriebsschlüssel 2 übertragen wird. Dieses vom Betriebsschlüssel 2 mittels des zweiten Betriebssignalempfängers 24 aufgenommene zweite Betriebssignal wird mittels des zweiten Betriebssignaldecodierers 26 anhand des Algorithmus in eine übertragene Kennzahl entschlüsselt. Nach erfolgter Entschlüsselung werden die übertragene Kennzahl sowie die im Datenspeicher 35 des Betriebsschlüssels 2 abgespeicherte Individualkennung nun zur Bildung eines ersten Betriebssignals im ersten Betriebssignalcodierer 16 des Betriebsschlüssels 2 anhand des festgelegten Algorithmus verwendet. Gleichzeitig wird die übertragene Kennzahl im Datenspeicher 35 gespeichert. Falls der Betriebsschlüssel 2 in der erweiterten Ausbaustufe mit Fernbedienung zur Türöffnung vorliegt, wird ein zusätzlicher Zähler, der die Anzahl der Türöffnungen zählt, auf Null gesetzt und dieser Zählerstand im Datenspeicher 35 abgespeichert. Das erste Betriebssignal wird anschließend auf den ersten Betriebssignalempfänger 21 in der Betriebsschlüsselaufnahme 3 übertragen. Danach wird das erste Betriebssignal im ersten Betriebssignaldecodierer 23 der Betriebsschlüsselaufnahme 3 gemäß dem festgelegten Algorithmus entschlüsselt, woraus eine ermittelte Kennzahl und eine ermittelte Individualkennung resultieren. Anschließend erfolgt ein Vergleich der ermittelten Individualkennung und ermittelten Kennzahl mit der im Datenspeicher 37 gespeicherten Individualkennung und Kennzahl. Geht dieser Vergleich positiv aus, d.h. handelt es sich um die richtige Individualkennung und Kennzahl, so wird von der Betriebsschlüsselaufnahme 3 über den Busknoten 20 die Inbetriebnahme des Betriebsaggregats 5 freigegeben, andernfalls kann keine Inbetriebnahme erfolgen. Der im Datenspeicher 37 abgelegte Zählerstand für die Türöffnung wird, falls entsprechend der erweiterten Ausbaustufe vorhanden, bei positivem Vergleich im Hinblick auf die Individualkennung und Kennzahl ebenfalls auf Null gesetzt.

Zur Vereinfachung des Aufwandes erfolgt zur Fernbedienung der Zentralverriegelung lediglich eine unidirektionale Signalübertragung vom Betriebsschlüssel 2 zum Dachsensor 6, obwohl auch dort eine im Hinblick auf den Diebstahlschutz sichere bidirektionale Kommunikation in analoger Art wie zwischen Betriebsschlüssel 2 und Betriebsschlüsselaufnahme 3 möglich ist. Die unidirektionale Signalübertragung verläuft im Einzelnen in folgender Weise.

Im Betriebsschlüssel 2 wird bei Betätigung der Taste 10 aus der im Datenspeicher 35 gespeicherten Individualkennung, der übertragenen Kennzahl, die bei der letzten Inbetriebnahme im Zufallszahlengenerator 36 der Betriebsschlüsselaufnahme 3 ermittelt wurde, und eines um Eins incrementierten Zählers, der die Anzahl der Türöffnungen seit der letzten Inbetriebnahme des Kraftfahrzeugs zählt, anhand eines festgelegten Algorithmus im ersten Betriebssignalcodierer 16 ein drittes Betriebssignal gebildet und gesendet. Gleichzeitig wird der incrementierte Zählerstand im Datenspeicher 35 des Betriebsschlüssels 2 abgelegt. Das über den Dachsensor 6 empfangene dritte Betriebssignal wird zum Busknoten 20 in der Betriebsschlüsselaufnahme 3 weitergeleitet und dort in einem dem Dachsensor 6 zugeordneten Decodierer mittels der im Datenspeicher 37 gespeicherten Kennzahl und des festgelegten Algorithmus entschlüsselt. Bei diesem Decodierer kann es sich um den bereits in der Betriebsschlüsselaufnahme 3 befindlichen ersten Betriebssignaldecodierer 23 handeln. Das Ergebnis der Entschlüsselung ergibt eine ermittelte Individualkennung und einen ermittelten Zählerstand. Die ermittelte Individualkennung wird mit der im Speicher 37 gespeicherten Individualkennung verglichen und bei Übereinstimmung weiter überprüft, ob der ermittelte Zählerstand größer oder gleich dem Zählerstand für die Anzahl der Türöffnungen ist, der im Datenspeicher 37 der Betriebsschlüsselaufnahme 3 abgespeichert ist. Falls diese Bedingung ebenfalls erfüllt ist, wird ein Ent- oder Verriegeln am Steuergerät 9 der Zentralverriegelung ausgelöst. Gleichzeitig wird der Zählerstand im Datenspeicher 37 der Betriebsschlüsselaufnahme 3 durch den ermittelten Zählerstand ersetzt.

Durch Vergleich des Zählerstandes für die Anzahl der Türöffnungen im Betriebsschlüssel 2 mit dem Zählerstand in der Betriebsschlüsselaufnahme 3 wird erreicht, daß ein unbefugter Benutzer mit einem durch Abhören des übertragenen dritten Betriebssignals kopierten Betriebsschlüssel das Kraftfahrzeug lediglich einmal öffnen kann. Sobald der berechtigte Benutzer ein weiteres Mal die Türöffnung betätigt, verändert sich der Zählerstand, ohne daß eine Inbetriebnahme des Kraftfahrzeugs notwendig ist, und eine weitere Öffnung mit dem kopierten Schlüssel ist nicht mehr möglich. Zur weiteren Erhöhung der Diebstahlsicherheit können die beiden Algorithmen zur Betätigung des Betriebsaggregats 5 und des Steuergeräts 9 für die Zentralverriegelung unterschiedlich sein und/oder in bestimmten zeitlichen Abständen wechseln.

Bei einer bevorzugten Ausführungsform der Erfindung erfolgt die Übertragung des ersten und zweiten Betriebssignals in der bidirektionalen sowie des dritten Betriebssignals in der unidirektionalen Kommunikation, wie beschrieben, als Infrarot-Signal.

Nachdem die Inbetriebnahme des Betriebsaggregats 5 vom Busknoten 20 freigegeben ist, kann gleichzeitig die Betätigung für die Entriegelung einer an sich bekannten, nicht näher gezeigten Lenkradsperre ausgelöst werden. Die Betätigung der Lenkradsperre kann mittels eines Elektromagneten erfolgen. Danach wird die Inbetriebnahme des Betriebsaggregats 5 durch ein weiteres vom Benutzer ausgelöstes Signal über den Busknoten 20 vorgenommen.

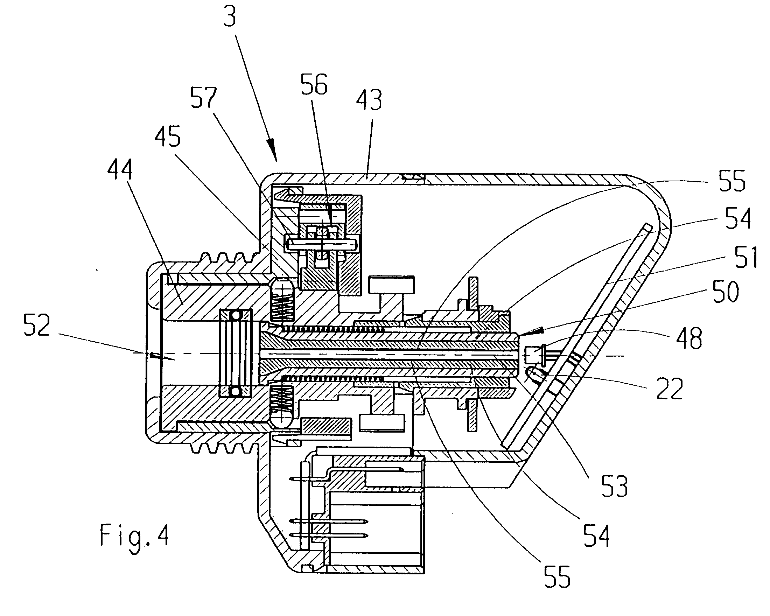

Die nähere Ausbildung des Betriebsschlüssels 2 und der Betriebsschlüsselaufnahme 3 ist in den Fig. 3 und 4 zu sehen. Wie in Fig. 3 gezeigt ist, besitzt der Betriebsschlüssel 2 ein Gehäuse 40, dessen hinterer Teil eine Leiterplatte 41 enthält. Auf der Leiterplatte 41 befindet sich die als integrierte Schaltung ausgebildete Schlüsselelektronik 14. Der vordere Teil des Gehäuses 40 ist als eine Art Stecker 42 zum Einführen in die Betriebsschlüsselaufnahme 3 ausgestaltet und enthält Öffnungen, in denen die Infrarot-Sendediode 17 des ersten Betriebssignalsenders 15 und die Infrarot-Empfangsdiode 25 des zweiten Betriebssignalempfängers 24 mit Verbindung zur Leiterplatte 41 angeordnet sind. Weiter befindet sich im Stecker noch das Photoelement 49. Das Gehäuse 40 enthält schließlich noch den schematisch angedeuteten Energiespeicher 38 für die Fernbedienung der Zentralverriegelung.

Die Betriebsschlüsselaufnahme 3 besteht, wie in Fig. 4 gezeigt ist, aus einem Gehäuse 43, das in einer Art Steckdose 44 zur Aufnahme des Steckers 42 am Betriebsschlüssel 2 endet. Die der optischen Signal- und Energieübertragung dienenden Lichtleiter sind als gemeinsamer Lichtleiterstab 50 ausgebildet, der im Gehäuse 43 befindlich ist. Der Lichtleiterstab 50 besteht aus einem in der Mitte befindlichen Lichtleiter 53 für die optische Energieübertragung 47 und einen weiteren Lichtleiter 54 für die optische Signalübertragung, der den mittleren Lichtleiter 53 ringförmig umgibt, so daß die beiden Lichtleiter 53, 54 einen gemeinsamen massiven Stab bilden. Die beiden Lichtleiter 53, 54 sind durch eine dazwischenliegende nicht lichtleitende Schicht 55 getrennt. Das eine Ende des Lichtleiterstabs 50 ist in unmittelbarer Nähe der Steckdose 44 angeordnet. Der Lichtleiterstab 50 führt von der Steckdose 44 bis zu einer im Gehäuse 43 der Betriebsschlüsselaufnahme 3 befindlichen Leiterplatte 51, wobei am zweiten Ende des Lichtleiterstabs 50 die elektrooptischen Wandlerelemente mit optischer Verbindung zum Lichtleiterstab 50 auf der Leiterplatte 51 angeordnet sind, nämlich die Infrarot-Empfangsdiode 22 des ersten Betriebssignalempfängers 21 und die in Fig. 4 nicht sichtbare Infrarot-Sendediode 28 des zweiten Betriebssignalsenders 27 sowie das Leuchtelement 48. Ist der Betriebsschlüssel 2 in die Betriebsschlüsselaufnahme 3 an der Öffnung 52 der Steckdose 44 eingeführt, so sind die elektrooptischen Wandlerelemente im Betriebsschlüssel 2, nämlich die Infrarot-Sendediode 17, die Infrarot-Empfangsdiode 25 und das Photoelement 49 mit dem ersten Ende des Lichtleiterstabs 50 optisch verbunden. Folglich sind die Infrarot-Sendediode 17 des Betriebsschlüssels 2 und die Infrarot-Empfangsdiode 22 der Betriebsschlüsselaufnahme 3 sowie die Infrarot-Empfangsdiode 25 des Betriebsschlüssels 2 und die Infrarot-Sendediode 28 der Betriebsschlüsselaufnahme 3 über den Lichtleiter 54 des Lichtleiterstabs 50 optisch gekoppelt. Weiter erfolgt eine optische Kopplung mittels des Lichtleiters 53 des Lichtleiterstabs 50 zwischen dem Leuchtelement 48 der Betriebsschlüsselaufnahme 3 und dem Photoelement 49 des Betriebsschlüssels 2 für die Energieübertragung 47.

Um die eigentliche Inbetriebnahme wie für den Benutzer beim Startvorgang mit einem herkömmlichen Zündschloß am Kraftfahrzeug gewohnt auszugestalten, ist die Steckdose 44 in der Betriebsschlüsselaufnahme 3 vorzugsweise drehbar ausgebildet. Mit der Steckdose 44 steht eine elastisch gekoppelte Drehhülse 45 in der Betriebsschlüsselaufnahme 3 in Wirkverbindung. Zur Einleitung der Inbetriebnahme nach erfolgreicher Übertragung der beiden Betriebssignale gemäß der bidirektionalen Kommunikation 46 wird dann die Drehhülse 45 zunächst entriegelt, indem ein Sperrbolzen 57 einer elektromagnetischen Sperreinrichtung 56 außer Eingriff mit der Drehhülse 45 bewegt wird. Der Benutzer kann nun den Betriebsschlüssel 2, wie beim herkömmlichen Zündschloß auch, mitsamt der Steckdose 44 und der Drehhülse 45 drehen. Dabei werden an bestimmten Drehstellungen der Drehhülse 45 Schaltsignale mittels einer Einrichtung erzeugt. Diese Einrichtung zur Erzeugung der Schaltsignale besteht aus im Gehäuse 43 befindlichen, nicht weiter gezeigten mechanischen, elektronischen, optischen, optoelektronischen o. dgl. Schaltelemente, die von der Drehhülse 45 betätigt werden. Diese Schaltsignale werden an den Busknoten 20 weitergegeben und bewirken die Freigabe der Parkleuchte, bestimmter Teile der Energieversorgung, beispielsweise für das Autoradio, usw.. Eines dieser Schaltsignale dient letztendlich dazu, daß das Betriebsaggregat 5 in Betrieb genommen wird, also beispielsweise der Motor des Kraftfahrzeugs gestartet wird.

Um den Betrieb des Betriebsaggregats 5 zu beenden, wird der Betriebsschlüssel 2 mitsamt der Steckdose 44 und der Drehhülse 45 wieder zurückgedreht. Dabei werden die Schaltsignale von der Einrichtung zur Erzeugung von Schaltsignalen verändert, also die entsprechenden Schaltelemente wieder ausgeschaltet. Die veränderten Schaltsignale werden über den Busknoten 20 zur Außerbetriebsetzung des Betriebsaggregats 5 weitergeleitet. Bei Entnahme des Betriebsschlüssels 2 aus der Betriebsschlüsselaufnahme 3 kann gleichzeitig eine Verriegelung des Lenkrades mittels einer mechanischen Lenkradsperre erfolgen, wobei die Verriegelung durch das Schaltsignal des Schalters 30 bewirkt werden kann.

Der Datenspeicher 35 im Betriebsschlüssel 2 kann auch noch für weitere Funktionen genutzt werden, beispielsweise zur Abspeicherung von Servicedaten, Benutzerdaten, u. dgl.. Insbesondere kann eine permanente Datenübertragung von der Betriebsschlüsselaufnahme 3 auf den Betriebsschlüssel 2 während des Fahrbetriebes des Kraftfahrzeugs mittels des zweiten Betriebssignalsenders 27 und des zweiten Betriebssignalempfängers 24 erfolgen. Es können dadurch Fahrdaten im Datenspeicher 35 in der Art eines elektronischen Fahrtenbuches gespeichert werden.

Die Erfindung ist nicht auf die beschriebenen und dargestellten Ausführungsbeispiele beschränkt. So ist ein derartiges Schließsystem nicht nur an Kraftfahrzeugen einsetzbar, sondern kann auch an Türen, beispielsweise in der Gebäudetechnik, Verwendung finden.

## Patentansprüche

1. Schließsystem (1), insbesondere an einem Kraftfahrzeug, bestehend aus einem Betriebsschlüssel (2), einer Betriebsschlüsselaufnahme (3) und einem zur Betriebsschlüsselaufnahme (3) zugehörigen Betriebsaggregat (5), mit im Betriebsschlüssel (2) und der Betriebsschlüsselaufnahme (3) befindlichen, elektrooptische Wandlerelemente (17, 22, 25, 28, 48, 49), wie Leuchtelemente, Photoelemente o. dgl., enthaltenden Mitteln zur Übertragung von codierten Betriebssignalen, wobei ein zweites Betriebssignal von der Betriebsschlüsselaufnahme (3) auf den Betriebsschlüssel (2) und ein erstes Betriebssignal vom Betriebsschlüssel (2) auf die Betriebsschlüsselaufnahme (3) übertragen wird, wobei das zweite Betriebssignal mit dem ersten Betriebssignal in einer bidirektionalen Kommunikation (46) in der Art eines Wechselcodes zusammenwirkt, so daß bei erfolgreicher Entschlüsselung der beiden übertragenen Betriebssignale eine Inbetriebnahme des Betriebsaggregats (5) ermöglicht ist, und wobei eine optische Energieübertragung (47) von der Betriebsschlüsselaufnahme (3) auf den Betriebsschlüssel (2) zum bestimmungsgemäßen Betrieb des Betriebsschlüssels (2) erfolgt, dadurch gekennzeichnet, daß die Signalübertragung über einen in der Betriebsschlüsselaufnahme (3) angeordneten Lichtleiter (54) und/oder die Energieübertragung über einen in der Betriebsschlüsselaufnahme (3) angeordneten Lichtleiter (53) erfolgt, und daß die entsprechenden im Betriebsschlüssel (2) und in der Betriebsschlüsselaufnahme (3) befindlichen elektrooptischen Wandlerelemente (17, 22, 25, 28, 48, 49) mit dem Lichtleiter (53, 54) oder den Lichtleitern in optischer Verbindung stehen.

2. Schließsystem nach Anspruch 1, dadurch gekennzeichnet, daß ein Lichtleiter (53) für die Energieübertragung (47) und ein weiterer Lichtleiter (54) für die Signalübertragung in einem gemeinsamen Lichtleiterstab (50) derart angeordnet sind, daß der Lichtleiter (53) zur Energieübertragung (47) in der Mitte befindlich ist und der weitere Lichtleiter (54) zur Signalübertragung diesen ringförmig umgibt, wobei die beiden Lichtleiter (53, 54) durch eine dazwischenliegende, nicht lichtleitende Schicht (55) getrennt sind.

3. Schließsystem nach Anspruch 1 oder 2, dadurch gekennzeichnet, daß der Code des ersten Betriebssignals verschlüsselt eine sowohl im Betriebsschlüssel (2) als auch in der Betriebsschlüsselaufnahme (3) jeweils in einem Datenspeicher (35, 37) abgespeicherte Individualkennung enthält, bei der es sich insbesondere um eine eindeutige Nummer handelt, daß vorzugsweise der Code des zweiten Betriebssignals verschlüsselt eine in der Betriebsschlüsselaufnahme (3) mittels eines Zufallszahlengenerators (36) ermittelte Zufallszahl als Kennzahl enthält, und daß weiter vorzugsweise der Code des ersten Betriebssignals verschlüsselt zusätzlich diese Kennzahl enthält, wobei die Verschlüsselung jeweils anhand eines Algorithmus erfolgt.

4. Schließsystem nach einem der Ansprüche 1 bis 3, dadurch gekennzeichnet, daß die Betriebsschlüsselaufnahme (3) als Zündschloß eines Kraftfahrzeugs, in das der Betriebsschlüssel (2) einführbar ist, und das Betriebsaggregat (5) als Motorelektronik des Kraftfahrzeugs, Wegfahrsperre o. dgl. ausgebildet sind.

5. Schließsystem nach einem der Ansprüche 1 bis 4, dadurch gekennzeichnet, daß der Betriebsschlüssel (2) gleichzeitig zur Fernbedienung einer Zentralverriegelung der Türen (12) des Kraftfahrzeugs mittels einer Taste (10) dient, indem ein drittes Betriebssignal entsprechend einem Code unidirektional von dem Betriebsschlüssel (2) auf einen am Kraftfahrzeug, beispielsweise am Innenspiegel (7), angeordneten Sensor (6) mit einem Empfangsbereich von ca. 360 Grad übertragbar ist und die Ent- und Verriegelung der Zentralverriegelung nach erfolgreicher Entschlüsselung des Codes des dritten Betriebssignals in einem dem Sensor (6) zugeordneten Decodierer erfolgt.

6. Schließsystem nach Anspruch 5, dadurch gekennzeichnet, daß der Code des dritten Betriebssignals die bei der letzten Inbetriebnahme des Betriebsaggregats (5) ermittelte und im Datenspeicher (35) des Betriebsschlüssel (2) abgespeicherte Kennzahl verschlüsselt enthält, daß der Code des dritten Betriebssignals den Zählerstand eines um Eins incrementierten Zählers, der die Anzahl der Betätigungen der Zentralverriegelung seit der letzten Inbetriebnahme des Betriebsaggregats (5) enthält und im Datenspeicher (35) des Betriebsschlüssels (2) abgespeichert ist, verschlüsselt enthält und daß weiter der Code des dritten Betriebssignals die Individualkennung verschlüsselt enthält, wobei die Verschlüsselung jeweils anhand eines Algorithmus erfolgt.

7. Schließsystem nach einem der Ansprüche 1 bis 6, dadurch gekennzeichnet, daß die als Zündschloß ausgebildete Betriebsschlüsselaufnahme (3) eine gegebenenfalls drehbar angeordnete Steckdose (44) für den Betriebsschlüssel (2) besitzt, und daß der Lichtleiterstab (50) derart an der Steckdose (44) in der Betriebsschlüsselaufnahme (3) angeordnet ist, daß ein Ende des Lichtleiterstabs (50) bei in die Betriebsschlüsselaufnahme (3) eingeführtem Betriebsschlüssel (2) eine optische Kopplung zu den optoelektronischen Wandlerelementen (17, 25, 49) im Betriebsschlüssel (2) herstellt und das andere Ende des Lichtleiterstabs (50) mit den auf einer Leiterplatte (51) in der Betriebsschlüsselaufnahme (3) befindlichen, korrespondierenden optoelektrischen Wandlerelementen (22, 28, 48) optisch gekoppelt ist.

8. Schließsystem nach Anspruch 7, dadurch gekennzeichnet, daß eine Drehbewegung einer mit der Steckdose (44) gegebenenfalls elastisch gekoppelten Drehhülse (45), zur Betätigung des Betriebsschlüssels (2) nach erfolgreicher Übertragung der Betriebssignale zwischen dem Betriebsschlüssel (2) und der Betriebsschlüsselaufnahme (3) durch eine Entriegelung einer Sperreinrichtung (56) durchführbar ist, und daß eine Einrichtung zur Erzeugung von Schaltsignalen in Abhängigkeit von der Drehstellung der Drehhülse (45) in der Betriebsschlüsselaufnahme (3) angeordnet ist, wobei wenigstens eines der Schaltsignale zur Inbetriebnahme des Betriebsaggregats (5) dient.

9. Schließsystem nach einem der Ansprüche 1 bis 8, dadurch gekennzeichnet, daß ein Busknoten (20), der beispielsweise als CAN-Knoten ausgebildet ist, mit der Betriebsschlüsselaufnahme (3) in Verbindung steht oder in der Betriebsschlüsselaufnahme (3) angeordnet ist, wobei vom Busknoten (20) eine Busleitung (39) zum zugehörigen Steuergerät für das Betriebsaggregat (5) angeordnet ist, und daß bei Fernbedienung der Zentralverriegelung mittels des dritten Betriebssignals, das aus Licht- oder Infrarot-Signalen besteht, der Sensor (6) mit dem Busknoten (20) in Verbindung steht, beispielsweise über einen Lichtleiter.

10. Schließsystem nach einem der Ansprüche 1 bis 9, dadurch gekennzeichnet, daß der Datenspeicher (35) im Betriebsschlüssel (2) zur Abspeicherung während des Betriebs des Betriebsaggregats (5) erzeugter Daten verwendbar ist, indem eine permanente Datenübertragung zwischen der Betriebsschlüsselaufnahme (3) und dem Betriebsschlüssel (2) während des Betriebs des Betriebsaggregats (5) bei in der Betriebsschlüsselaufnahme (3) eingeführtem Betriebsschlüssel (2) erfolgt.

11. Schließsystem nach einem der Ansprüche 1 bis 10, dadurch gekennzeichnet, daß ein mechanischer Schlüssel (11) ausklappbar am Betriebsschlüssel (2) angeordnet ist, mit dem eine Notöffnung wenigstens einer mit einem mechanischen Türschloß (13) versehenen Autotür (12) möglich ist.

12. Schließsystem nach einem der Ansprüche 1 bis 11, dadurch gekennzeichnet, daß die Energieübertragung (47) bei in die Betriebsschlüsselaufnahme (3) eingeführtem Betriebsschlüssel (2) einschaltbar ist.

## Claims

1. Locking system (1), in particular on a motor vehicle, comprising an operating key (2), an operating key hole (3) and an operating unit (5) corresponding to the operating key hole (3) having in the operating key (2) and the operating key hole (3) electro-optical transformer elements (17, 22, 25, 28, 48, 49) such as light elements, photovoltaic cells or the like, for transmitting coded operating signals, wherein a second operating signal is transmitted from the operating key hole (3) to the operating key (2) and a first operating signal is transmitted from the operating key (2) to the operating key hole (3), wherein the second operating signal and the first operating signal interact in bidirectional communication (46) as an interactive code, so that the operating unit (5) may be actuated when both transmitted operating signals are decoded with success, and wherein optical energy transmission (47) occurs from the operating key hole (3) to the operating key (2) to allow the operation of the operating key (2) according to its purpose, characterised in that the signal transmission occurs via an optical guide (54) arranged in the operating key hole (3) and/or the energy transmission occurs via an optical guide (53) arranged in the operating key hole (3), and in that the corresponding electro-optical transformer elements (17, 22, 25, 28, 48, 49) contained in the operating key (2) and in the operating key hole (3) are in optical connection with the optical guide (53, 54) or the optical guides.

2. Locking system according to Claim 1, characterised in that an optical guide (53) for the energy transmission (47) and a further optical guide (54) for the signal transmission are arranged in the same optical guide rod (50) in such a way that the optical guide (53) for energy transmission (47) is in the centre and the other optical guide (54) for signal transmission surrounds the latter in a ring, wherein the two optical guides (53, 54) are separated by a non-light conducting layer (55) situated between them.

3. Locking system according to Claim 1 or 2, characterised in that the code of the first operating signal contains, in coded form, a personal identification key, in particular a definite number, stored in a data storage unit (35, 37) in both the operating key (2) and the operating key hole (3), in that preferably the code of the second operating signal contains, in coded form, a key which is a random number obtained in the operating key hole (3) by means of a random number generator (36), and in that, furthermore, preferably the code of the first operating signal also contains this key in coded form, wherein in each case the encoding is performed by means of an algorithm.

4. Locking system according to one of Claims 1 to 3, characterised in that the operating key hole (3) is constructed as the ignition lock of a motor vehicle into which the operating key (2) can be inserted-and the operating unit (5) is constructed as the engine electronic system of the motor vehicle, the drive immobiliser or the like.

5. Locking system according to one of Claims 1 to 4, characterised in that the operating key (2) also serves as the remote control of a central locking system of the doors (12) of the motor vehicle by means of a button (10), in that a third operating signal corresponding to a code can be transmitted unidirectionally from the operating key (2) to a sensor (6) with a range of reception of approx. 360 degrees arranged on the motor vehicle, for example on the inside mirror (7), and the central locking system is locked or unlocked when the code of the third operating signal has been decoded with success in a decoding device assigned to the sensor (6).

6. Locking system according to Claim 5, characterised in that the code of the third operating signal contains, in coded form, the key which was obtained when the operating unit (5) was last actuated and saved in the data storage unit (35) of the operating key (2), in that the code of the third operating signal contains, in coded form, the counter reading of a counter incremented by one which gives the number of times the central locking system has been used since the operating unit (5) was last actuated and which is stored in the data storage unit (35) of the operating key (2), and in that, furthermore, the code of the third operating signal contains, in coded form, the personal identification key, wherein in each case the encoding is done by means of an algorithm.

7. Locking system according to one of Claims 1 to 6, characterised in that the operating key hole (3), designed as an ignition lock, has a socket (44) which is possibly rotatable for the operating key (2), and in that the optical guide rod (50) is arranged on the socket (44) in the operating key hole (3) in such a way that one end of the optical guide rod (50) establishes an optical coupling to the optoelectronic transformer elements (17, 25, 49) in the operating key (2) when the operating key (2) is inserted in the operating key hole (3), and the other end of the optical guide rod (50) is optically coupled with the corresponding optoelectronical transformer elements (22, 28, 48) situated on a circuit board (51) in the operating key hole (3).

8. Locking system according to Claim 7, characterised in that a rotation of a rotating sleeve (45) which may be flexibly coupled with the socket (44) may be carried out following the unlocking of a locking device (56), allowing the operating key (2) to be operated following the successful transmission of the operating signals between the operating key (2) and the operating key hole (3), and in that a device for generating switch signals which depends on the degree of rotation of the rotating sleeve (45) is arranged in the operating key hole (3), wherein at least one of the switch signals serves to actuate the operating unit (5).

9. Locking system according to one of Claims 1 to 8, characterised in that a bus node (20), which is designed, for example, as a CAN node is connected with the operating key hole (3) or arranged in the operating key hole (3), wherein a bus line (39) is arranged from the bus node (20) to the corresponding control device for the operating unit (5), and in that the sensor (6) is connected with the bus node (20), for example via an optical guide, when the remote control of the central locking system is actuated by means of the third operating signal, which comprises light or infrared signals.

10. Locking system according to one of Claims 1 to 9, characterised in that the data storage unit (35) in the operating key (2) can be used to store data produced during the operation of the operating unit (5), in that a constant data transmission occurs between the operating key hole (3) and the operating key (2) during the operation of the operating unit (5) when the operating key (2) is inserted into the operating key hole (3).

11. Locking system according to one of Claims 1 to 10, characterised in that a mechanical key (11) can be pulled out from the operating key (2) which allows an emergency opening of at least one car door (12) provided with a mechanical lock (13).

12. Locking system according to one of Claims 1 to 11, characterised in that the energy transmission (47) may be switched on when the operating key (2) is inserted into the operating key hole (3).

## Revendications

1. Système de verrouillage (1), en particulier sur un véhicule automobile, comportant une clé de service (2), un récepteur de clé de service (3) et un appareil de service (5) correspondant au récepteur de clé de service (3), ayant des moyens comportant des éléments convertisseurs électro-optiques (17,22,25,28,48,49), comme des éléments luminescents, photoéléments ou analogues, se trouvant dans la clé de service (2) et le récepteur de clé de service (3), pour transférer des signaux de service codés, un second signal de service étant transmis du récepteur de clé de service (3) à la clé de service (2) et un premier signal de service étant transmis de la clé de service (2) au récepteur de clé de service (3), le second signal de service coopérant avec le premier signal de service dans une communication bidirectionnelle (46) à la manière d'un code d'échange, de sorte que, lors du décodage couronné de succès des deux signaux de service transmis, une mise en oeuvre de l'appareil de service (5) est rendue possible, et un transfert d'énergie optique (47) étant effectué du récepteur de clé de service (3) à la clé de service (2) pour l'opération prescrite de la clé de service (2),
caractérisé en ce que le transfert de signaux est effectué par l'intermédiaire d'un guide de lumière (54) agencé dans le récepteur de clé de service (3) et/ou le transfert d'énergie est effectué par l'intermédiaire d'un guide de lumière (53) agencé dans le récepteur de clé de service (3), et en ce que les éléments convertisseurs électro-optiques correspondants (17,22,25,28,48,49) se trouvant dans la clé de service (2) et dans le récepteur de clé de service (3) sont en liaison optique avec le guide de lumière (53,54) ou les guides de lumière.

2. Système de verrouillage selon la revendication 1,
caractérisé en ce qu'un guide de lumière (53) pour le transfert de l'énergie (47) et un autre guide de lumière (54) pour le transfert des signaux sont agencés dans une baguette de guides de lumière (50) commune, de sorte que le guide de lumière (53) pour le transfert d'énergie (47) se trouve au centre et l'autre guide de lumière (54) pour le transfert des signaux entoure celui-ci de façon annulaire, les deux guides de lumière (53,54) étant séparés par une couche intermédiaire (55) ne conduisant pas la lumière.

3. Système de verrouillage selon la revendication 1 ou 2,
caractérisé en ce que le code du premier signal de service contient, de façon chiffrée, une caractéristique d'identification individuelle mémorisée à chaque fois dans une mémoire de données (35,37) aussi bien dans la clé de service (2) que dans le récepteur de clé de service (3), ladite caractéristique étant en particulier un nombre univoque, en ce que, avantageusement, le code du second signal de service contient, de façon chiffrée, un nombre aléatoire, comme nombre caractéristique, déterminé dans le récepteur de clé de service (3) au moyen d'un générateur de nombres aléatoires (36), et en ce que, encore avantageusement, le code du premier signal de service contient en plus, de façon chiffrée, ce nombre caractéristique, le chiffrage étant effectué, à chaque fois, en référence à un algorithme.

4. Système de verrouillage selon une des revendications 1 à 3,
caractérisé en ce que le récepteur de clé de service (3) est réalisé comme serrure de contact d'un véhicule automobile, dans laquelle la clé de service (2) peut être introduite, et l'appareil de service (5) est réalisé comme électronique du moteur du véhicule automobile, bloqueur de marche ou analogue.

5. Système de verrouillage selon une des revendications 1 à 4,
caractérisé en ce que la clé de service (2) sert simultanément à la télécommande d'un verrouillage central des portes (12) du véhicule automobile au moyen d'une touche (10), en ce qu'un troisième signal de service peut être transmis, de façon correspondant à un code, unidirectionnellement de la clé de service (2) à un capteur (6) agencé sur le véhicule automobile, par exemple sur le rétroviseur (7), avec une zone de réception d'environ 360°, et le verrouillage et le déverrouillage du verrouillage central sont effectués après le décodage couronné de succès du code du troisième signal de service dans un décodeur associé au capteur (6).

6. Système de verrouillage selon la revendication 5,
caractérisé en ce que le code du troisième signal de service contient, de façon chiffrée, le nombre caractéristique mémorisé dans la mémoire de données (35) de la clé de service (2) et déterminé lors de la dernière mise en oeuvre de l'appareil de service (5), en ce que le code du troisième signal de service contient, de façon chiffrée, l'état d'un compteur incrémenté de un, qui contient le nombre des actionnements du verrouillage central depuis la dernière mise en oeuvre de l'appareil de service (5) et est mémorisé dans la mémoire de données (35) de la clé de service (2), et en ce que, de plus, le code du troisième signal de service contient, de façon chiffrée, la caractéristique d'identification individuelle, le chiffrage étant effectué, à chaque fois, en référence à un algorithme.

7. Système de verrouillage selon une des revendications 1 à 6,
caractérisé en ce que le récepteur de clé de service (3) réalisé comme serrure de contact possède une fiche femelle (44), agencée le cas échéant de façon rotative, pour la clé de service (2), et en ce que la barrette de guides de lumière (50) est agencée sur la fiche femelle (44) dans le récepteur de clé de service (3) de sorte qu'une extrémité de la barrette de guides de lumière (50), lorsque la clé de service (2) est introduite dans le récepteur de clé de service (3), forme un couplage optique vers les éléments convertisseurs optoélectroniques (17,25,49) dans la clé de service (2), et l'autre extrémité de la barrette de guides de lumière (50) est couplée de façon optique avec les éléments convertisseurs optoélectriques correspondants (22,28,48) se trouvant sur une plaquette imprimée (51) dans le récepteur de clé de service (3).

8. Système de verrouillage selon la revendication 7,
caractérisé en ce qu'un mouvement rotatif d'une douille rotative (45) couplée le cas échéant de façon élastique avec la fiche femelle (44), pour l'actionnement de la clé de service (2) après le transfert couronné de succès des signaux de service entre la clé de service (2) et le récepteur de clé de service (3), peut être effectué par un déverrouillage d'un dispositif d'arrêt (56), et en ce qu'un dispositif pour engendrer des signaux de commutation de façon dépendant de la position de rotation de la douille rotative (45) est agencé dans le récepteur de clé de service (3), au moins un des signaux de commutation servant à la mise en oeuvre de l'appareil de service (5).

9. Système de verrouillage selon une des revendications 1 à 8,
caractérisé en ce qu'un noeud de bus (20), qui est réalisé par exemple comme noeud CAN, est en liaison avec le récepteur de clé de service (3) ou est agencé dans le récepteur de clé de service (3), une liaison de bus (39) étant agencée du noeud de bus (20) vers l'appareil de commande correspondant pour l'appareil de service (5), et en ce que, pour la télécommande du verrouillage central au moyen du troisième signal de service, qui est constitué de signaux lumineux ou infrarouges, le capteur (6) est relié au noeud de bus (20), par exemple par l'intermédiaire d'un guide de lumière.

10. Système de verrouillage selon une des revendications 1 à 9,
caractérisé en ce que la mémoire de données (35) est utilisable dans la clé de service (2) pour mémoriser des données engendrées pendant la mise en oeuvre de l'appareil de service (5), en ce qu'un transfert de données permanent a lieu entre le récepteur de clé de service (3) et la clé de service (2) pendant la mise en oeuvre de l'appareil de service (5) lorsque la clé de service (2) est introduite dans le récepteur de clé de service (3).

11. Système de verrouillage selon une des revendications 1 à 10,
caractérisé en ce qu'une clé mécanique (11) est agencée de façon pivotante sur la clé de service (2), grâce à laquelle une ouverture d'urgence d'au moins une porte de voiture (12) munie d'une serrure de porte mécanique (13) est possible.

12. Système de verrouillage selon une des revendications 1 à 11,
caractérisé en ce que le transfert d'énergie (47) peut être connecté lorsque la clé de service (2) est introduite dans le récepteur de clé de service (3).
